# EUROPÄISCHE PATENTSCHRIFT

(11) **EP 1 337 154 B1**
(45) Veröffentlichungstag und Bekanntmachung des Hinweises auf die Patenterteilung: **10.08.2005**
(21) Anmeldenummer: 01990462.2
(22) Anmeldetag: 30.11.2001
(51) Int. Cl.: A22C 15/00

(54) **VERFAHREN UND VORRICHTUNG ZUR LAGERUNG VON NATURDÄRMEN SOWIE TIEFGEFRORENE NATURDÄRME**
METHOD AND DEVICE FOR STORING NATURAL CASINGS AND DEEP-FROZEN NATURAL CASINGS
PROCEDE ET DISPOSITIF POUR LE STOCKAGE DE BOYAUX NATURELS ET BOYAUX NATURELS SURGELES

(30) Priorität: 02.12.2000 DE 10059989
(43) Veröffentlichungstag der Anmeldung: 27.08.2003
(73) Patentinhaber: Woiwode, Oliver, 53332 Bornheim-Merten (DE)
(72) Erfinder: Woiwode, Oliver, 53332 Bornheim-Merten (DE)
(74) Vertreter: von Kirschbaum, Alexander, Dipl.-Ing.
(86) Internationale Anmeldenummer: PCT/EP2001/014003
(87) Internationale Veröffentlichungsnummer: WO 2002/043501

(56) Entgegenhaltungen:
- DE-B- 1 080 431
- DE-B- 1 812 370
- GB-A- 876 285
- IT-B- 1 242 814

## Beschreibung

Gegenstand der vorliegenden Erfindung ist ein Verfahren und eine Vorrichtung zur Lagerung von Naturdärmen sowie tiefgefrorenen Naturdärmen.

Fleischprodukte, insbesondere Würste werden in Naturdärmen abgefüllt. Die dazu verwendeten Naturdärme stammen insbesondere aus Schweinen und Schafen. Die Därme werden den geschlachteten Tieren entnommen und für ihre Verwendung als Fleischverpackung bzw. Wursthülle aufbereitet. Diese Aufbereitung umfasst im Wesentlichen die Reinigung.

Die Naturdärme werden zwecks Konservierung üblicherweise in einer Salzlake bis zur Verwendung gelagert. Je nach Konzentration der Salzlake sind die Naturdärme ggf. mehrere Wochen haltbar. Die Salzlake entzieht dem Naturdarm Wasser, so dass die Gleitfähigkeit des Darms verringert wird. Die Naturdärme werden daher vor ihrer Befüllung eingeweicht, um die Salzlake weitgehend zu entfernen und insbesondere die Innenseite des Naturdarms beim Befüllungsvorgang gleitfähiger zu machen. Bei langer Lagerzeit, für die die Konzentration des Salzes in der Salzlake erhöht werden muß, verlängert sich der Einweichprozess vor dem Befüllen der Därme und die Gleitfähigkeit verringert sich zusätzlich. Dadurch erhöht sich der Anteil an geplatzten Därmen im Füllprozess. Nach dem Einweichen sind die Naturdärme nur ca. 4 Tage lagerbar/haltbar.

Aus DE 1812370 ist es bekannt, Naturdärme, wie Schweine- und Schafdärme, zur Konservierung und Lagerung in einem Bereich von -35 bis -55 °C tief zu frieren. Hierzu werden die Därme in einer Druckkammer angeordnet, die sodann mit Stickstoff befüllt wird und in einen geeigneten Kaltraum eingebracht wird. Hierbei kann ein Zusammenfrieren der Därme innerhalb der Kammer auftreten.

Aus DE 6910556 ist eine Vorrichtung zum Trocknen sowie zum Schneiden von Därmen bekannt, die stabförmige Trägereinrichtungen aufweist, auf die die Därme aufziehbar sind.

Es ist wünschenswert eine längere Lagerungszeit der Naturdärme und geringeren Aufwand bei der Vorbereitung der Befüllung der Naturdärme zu erreichen.

Das der Erfindung zugrunde liegende technische Problem besteht darin, ein Verfahren zu schaffen, bei dem ein Zusammenfrieren der Naturdärme vermieden ist.

Die Lösung der Aufgabe erfolgt erfindungsgemäß durch ein Verfahren gemäß Anspruch 1.

Gelöst wird dieses Problem durch ein Verfahren zur Lagerung von Naturdärmen, insbesondere Schweine- und Schafsdärmen für die Fleisch- und Wurstverpackung, wobei die Naturdärme nach einer Aufbereitung auf im Wesentlichen stabförmige Trägereinrichtungen aufgezogen und anschließend auf mindestens -50 °C tiefgefroren werden. Vorzugsweise werden die Därme auf mindestens -60 °C, besonders bevorzugt auf mindestens -70 °C tiefgefroren.

Durch das Vorsehen einzelner Naturdärme auf gesonderten im Wesentlichen stabförmigen Trägereinrichtungen kann ein Zusammenfrieren der Därme und somit ein Beschädigen der Därme beim Auftauen vermieden werden. Hierzu sind die Trägereinrichtungen vorzugsweise an einem Gestell befestigt, wobei der Abstand der Trägereinrichtungen derart gewählt ist, dass sich die auf die Trägereinrichtungen aufgezogenen Naturdärme nicht berühren. Besonders bevorzugt ist es, die Trägereinrichtungen lösbar mit dem Gestell zu verbinden. Es ist somit möglich, die Naturdärme, vorzugsweise maschinell, auf die im Wesentlichen stabförmigen Trägereinrichtungen aufzuziehen und die einzelnen Trägereinrichtungen sodann mit dem Gestell zu verbinden. Das erfindungsgemäße Verfahren weist somit vorzugsweise den zusätzlichen Schritt auf, die mit Naturdarm bestückten Trägereinrichtungen an einem Gestell lösbar anzubringen. Dies hat ferner den Vorteil, dass die Naturdärme nach dem Tiefgefrieren zusammen mit der Trägereinrichtung von dem Gestell wieder abgenommen werden können und auch zusammen mit den Trägereinrichtungen transportiert werden können.

Vorzugsweise wird der Einfrierprozess so gesteuert, dass die Naturdärme sehr schnell auf die Temperatur von mindestens -30 °C tiefgefroren werden. Die anschließende weitere Abkühlung kann langsamer erfolgen. Dies kann z. B. durch effektive Kühlanlagen erreicht werden. Diese sind in der Lage, in relativ kurzer Zeit große Wärmemengen abzutransportieren. Es kommen insbesondere handelsübliche Kühlanlagen der Fa. Linde AG, Deutschland, zur Ausführung der Erfindung in Betracht. Vorzugsweise erfolgt die Schockgefrierung und ggf. der gesamte Einfrierprozess unter Stickstoffatmosphäre oder unter Zugabe von Stickstoff.

Vorzugsweise erfolgt der gesamte Tiefgefrierprozess in weniger als 15 Minuten, insbesondere weniger als 10 Minuten und besonders bevorzugt in weniger als 7 Minuten.

Die Schockgefrierung der Naturdärme gemäß vorliegender Erfindung gewährleistet eine Lagerung über Monate, im Wesentlichen unter Erhalt der Eigenschaften der Naturdärme. Mikrobielle Kontamination wird auf ein Minimum reduziert. Das erfindungsgemäße Verfahren wirkt sich weiterhin positiv auf die Erhaltung des Wasseranteils im Naturdarm aus, was sich wiederum in einer verbesserten Weiterverarbeitung in der Fleischwarenindustrie auswirkt. Bei üblicher Konservierung mit Salz wird dem Darm nämlich das Wasser entzogen und macht die Weiterverarbeitung aufwendiger. Durch das erfindungsgemäße Verfahren bleibt die Gleitfähigkeit des Naturdarms nach der Lagerung und dem Auftauen erhalten. Ein weiterer Vorteil besteht darin, dass eine saubere Handhabung und entsprechend hygienischer Versand ermöglicht wird. Die sonst zur Lagerung und Konservierung verwendete Salzlake kann bei Transport oder Handhabung der Naturdärme auslaufen, wodurch neben Verschmutzungen in den Abfüllbetrieben oder Transportfahrzeugen nachteilig in Erscheinung tritt, dass die Naturdärme austrocknen und nicht mehr verwendet werden können.

Das Auftauen der erfindungsgemäß tiefgefrorenen Naturdärme kann innerhalb von etwa 10 min. erfolgen, so dass die Naturdärme innerhalb von 10 min. füllfähig sind. Das Auftauen der Naturdärme erfolgt vorzugsweise in warmem Wasser, das ggf. mit geeigneten Zusatzstoffen versetzt sein kann. Da ein schnelles Auftauen der erfindungsgemäß tiefgefrorenen Naturdärme ohne Beeinträchtigung der Qualität der Naturdärme möglich ist, können Bedarfsschwankungen schnell ausgeglichen werden. Dies hat gegenüber herkömmlichen in Salzlake gelagerten Naturdärmen den Vorteil, dass ein erheblich schnelleres Bereitstellen der Naturdärme zur Weiterverarbeitung möglich ist. Bei in Salzlake gelagerten Naturdärmen ist es erforderlich, diese bereits am Vortag einzuweichen, um die Salzlake weitgehend zu entfernen und insbesondere die Innenseite der Naturdärme für den Befüllvorgang gleitfähig zu machen. Bei kürzeren Einweichzeiten wird die Salzlake nicht ausreichend aus dem Naturdarm entfernt, so dass es zu einem erhöhten Anteil an geplatzten Naturdärmen im Füllprozess kommt. Das erfindungsgemäße Verfahren hat ferner den Vorteil, dass keine Salzlaken benötigt werden und somit das Entsorgen von Salzlaken entfällt. Das erfindungsgemäße Verfahren ist somit umweltfreundlicher.

Vorzugsweise umfasst die Aufarbeitung Entsalzen der Naturdärme und Einweichen der Naturdärme, ggf. unter Zuhilfenahme von lebensmittelrechtlich zugelassenen Weichmachern.

Zum Halten von auf stabförmigen Trägereinrichtungen aufgezogenen Naturdärmen kann eine Vorrichtung vorgesehen werden. Die Naturdärme werden hierzu vor dem Gefrieren maschinell auf stabförmige Trägereinrichtungen, wie Plastikröhrchen aufgesteckt, so dass der Naturdarm in geraffter Form auf der Trägereinrichtung vorliegt. Anschließend wird die Trägereinrichtung zusammen mit dem aufgesteckten Naturdarm an einem verfahrbaren Gestell lösbar angebracht. Das verfahrbare Gestell kann sodann zum Gefrieren der Naturdärme in eine Kühl- bzw. Gefrieranlage gebracht werden.

Die Vorrichtung zum Halten von auf stabförmigen Trägereinrichtungen aufsteckbaren Naturdärmen umfasst somit ein verfahrbares Gestell, an dem die Trägereinrichtungen lösbar angebracht sind. Vorzugsweise handelt es sich um eine Vielzahl von Trägereinrichtungen, so dass eine große Menge an Naturdarm an einem Gestell untergebracht und gemeinsam gefroren werden kann. Durch die erfindungsgemäße Vorrichtung ist es möglich eine große Menge an Naturdarm wirtschaftlich einzufrieren, um eine langfristige Lagerung sowie eine vereinfachte Weiterverarbeitung der Naturdärme zu ermöglichen.

Vorzugsweise sind die Trägereinrichtungen derart an dem Gestell gehalten, dass ein Berühren der auf den Trägereinrichtungen aufgesteckten Naturdärme während des Gefriervorgangs vermieden ist. Hierdurch ist das Zerreißen oder Beschädigen der Naturdärme bei der späteren Weiterverarbeitung vermieden.

Zum einfachen Handhaben der Trägereinrichtungen weist das Gestell Aufnahmeeinrichtungen mit mindestens einem Halteelement auf. Das Halteelement dient zum Halten der Trägereinrichtungen, wobei die Halteelemente derart ausgebildet sind, dass die Trägereinrichtungen durch eine Steckverbindung mit dem Halteelement verbindbar sind. Bei dem Halteelement handelt es sich vorzugsweise um stabförmige Ansätze mit einem Außendurchmesser, der dem Innendurchmesser von als Rohre ausgebildeten Trägereinrichtungen entspricht. Hierdurch ist ein einfaches Aufstecken der Trägereinrichtungen auf die Halteelemente ermöglicht.

Die Halteelemente sind vorzugsweise derart ausgebildet, dass die Trägereinrichtungen, ausgehend von den Halteelementen steigend angeordnet sind. Dies hat den Vorteil, dass die Naturdärme, wenn sie sich auf dem verfahrbaren Gestell befinden, nicht von den Trägereinrichtungen herunterrutschen können. Eine gesonderte Sicherung der Naturdärme gegen Herunterrutschen ist daher nicht erforderlich.

Die einzelnen an der Aufnahmeeinrichtung vorgesehenen Halteelemente sind in einem Abstand zueinander angeordnet, der derart bemessen ist, dass ein Berühren der Naturdärme vermieden ist. Hierdurch ist ein Beschädigen der Naturdärme während des Gefrierens und während der späteren Weiterverarbeitung vermieden. An der Aufnahmeeinrichtung des Gestells sind, vorzugsweise mindestens fünf, besonders bevorzugt mindestens sieben und insbesondere mindestens neun Halteelemente vorgesehen. Die Anzahl der an einer Aufnahmeeinrichtung vorgesehenen Trägereinrichtungen ist vorzugsweise so gewählt, dass je Aufnahmeeinrichtung ein gesamter Bund an Naturdärmen unterbringbar ist. Bei einem Bund handelt es sich um eine handelsübliche Einheit von einer Länge von 91,4 m. Die einzelnen auf die in einer Aufnahmeeinrichtung gesteckten Trägereinrichtungen aufgezogenen Naturdärme weisen in Summe somit eine Länge von 91,4 m auf.

Die Aufnahmeeinrichtungen können ebenfalls über Steckelemente mit dem Gestell verbunden. Es ist somit möglich, eine mehrere Haltelemente aufweisende Aufnahmeeinrichtung, unabhängig von dem Gestell, mit einer Anzahl Trägereinrichtungen zu bestücken. Die mit Trägereinrichtungen bestückte Aufnahmeeinrichtung wird sodann durch das Steckelement mit dem Gestell verbunden. Bei den Steckelementen handelt es sich vorzugsweise um Hülsen, in die die Aufnahmeelemente einsteckbar sind. Vorzugsweise weist das Gestell mehrere Aufnahmeeinrichtungen auf. Die Anzahl der Aufnahmeeinrichtungen ist so gewählt, dass ein erhöhter Feuchtigkeitsverlust der Naturdärme während dem Bestücken des Gestells vermieden ist.

Vorzugsweise wird der Naturdarm in, auf den Trägereinrichtungen aufgezogener Form eingeweicht, gegebenenfalls in Gegenwart von Weichmachern, und nach Einweichen auf transportierbare Gestelle verbracht.

Sobald ein Gestell vollständig bestückt ist oder eine maximale Zeitspanne zum Bestücken des Gestells erreicht ist, wird das verfahrbare Gestell zum Tiefgefrieren in eine entsprechende Kühl- bzw. Gefrieranlage geschoben. In dieser werden die Naturdärme, vorzugsweise 7 - 10 Minuten bei etwa - 70°C tiefgefroren. Das Tiefgefrieren erfolgt vorzugsweise unter Stickstoffatmosphäre oder unter Zugabe von Stickstoff.

Nach Schockgefrierung werden die auf die Röhrchen bzw. Trägereinrichtungen aufgezogenen tiefgefrorenen Naturdärme aus dem Gefrierschrank genommen und verpackt. Die weitere Lagerung und der Transport erfolgen im tiefgefrorenen Zustand, vorzugsweise bei einer Temperatur von -5 bis -10 °C. Der Anwender kann die Naturdärme im tiefgefrorenen Zustand mehrere Monate lagern, ohne dass die Naturdärme ihre Eignung als Wurstumhüllung verlieren.

Das Verwenden tiefgefrorener Naturdärme hat neben der langen Lagerungsmöglichkeit den Vorteil, dass die Prozesszeiten bei der Weiterverarbeitung der Därme erheblich verringert werden können, da die Naturdärme innerhalb weniger Minuten, insbesondere weniger als 10 Min., aufgetaut und weiterverarbeitet werden können. Dies hat ferner den Vorteil, dass auch kurzfristige Bedarfsschwankungen schnell ausgeglichen werden können. Um eine derartige Qualität bei in Lake eingelegten Naturdärmen zu erreichen, müssen diese bereits am Vortag eingeweicht werden. Bei nur kurzfristigem Einweichen von Naturdärmen wird die Salzlake nicht ausreichend aus dem Naturdarm entzogen, so dass der Naturdarm beim Befüllen leichter platzen kann. Dies erhöht die Herstellungskosten sowie den Verbrauch an Naturdärmen und Füllstoffen wie Fleisch oder Wurst. Ein weiterer Vorteil besteht darin, dass die Transportkosten für gefrorene Naturdärme erheblich geringer sind, da die Naturdärme nicht in Lake transportiert werden müssen und daher das Versandgewicht erheblich geringer ist.

Gegenstand der vorliegenden Erfindung ist auch ein tiefgefrorener Naturdarm, der auf eine stabförmige Trägereinrichtung, insbesondere eine im Wesentlichen zylindrische Trägereinrichtung, aufgezogen ist. Der tiefgefrorene Naturdarm ist erhältlich durch ein Schockgefrierverfahren gemäß der Erfindung.

Der erfindungsgemäße Naturdarm eignet sich vorzugsweise für die industrielle Verarbeitung, da eine rationelle Verarbeitung mit geringem Vorbereitungsaufwand gegeben ist.

### Beispiel:

Schweinedärme zur Befüllung mit Wurst werden entsalzt und eingeweicht mit einer wässrigen Lösung, die einen Weichmacher enthält. Die so behandelten Därme werden auf Röhrchen aufgezogen und gleichzeitig mit der wässrigen Lösung von innen geflößt. Die aufgezogenen Därme werden in o.g. Lösung eingelegt.

Die einzelnen Röhrchen werden auf einem fahrbaren Gestell aufgelegt bzw. aufgesteckt. Die Röhrchen mit den Därmen sollen einander nicht berühren und möglichst zügig nacheinander aufgelegt werden, um den Wassergehalt im Darm zu erhalten. Es folgt das Einfahren des Wagens in einen Schockgefrierschrank und Schockfrostung auf etwa -50 °C bis - 80°C, vorzugsweise -65°C bis -75°C, unter Zugabe von Stickstoff.

Danach können die Därme entnommen und gebündelt werden, um die handelsübliche Einheit von einem Bund, 91,4 m zu erlangen. Die Verpackung erfolgt in Kartons mit Einlegebeuteln, die vorzugsweise einen, drei oder fünf Bunde enthalten. Lagerung und Versand erfolgt tiefgefroren.

Nachfolgend wird die Erfindung anhand einer bevorzugten Ausführungsform, unter Bezugnahme auf die anliegenden Zeichnungen näher erläutert.

Es zeigen:
- Fig. 1: eine schematische Seitenansicht einer Ausführungsform der Vorrichtung, und
- Fig. 2: eine schematische Vorderansicht der in Fig. 1 dargestellten Ausführungsform.

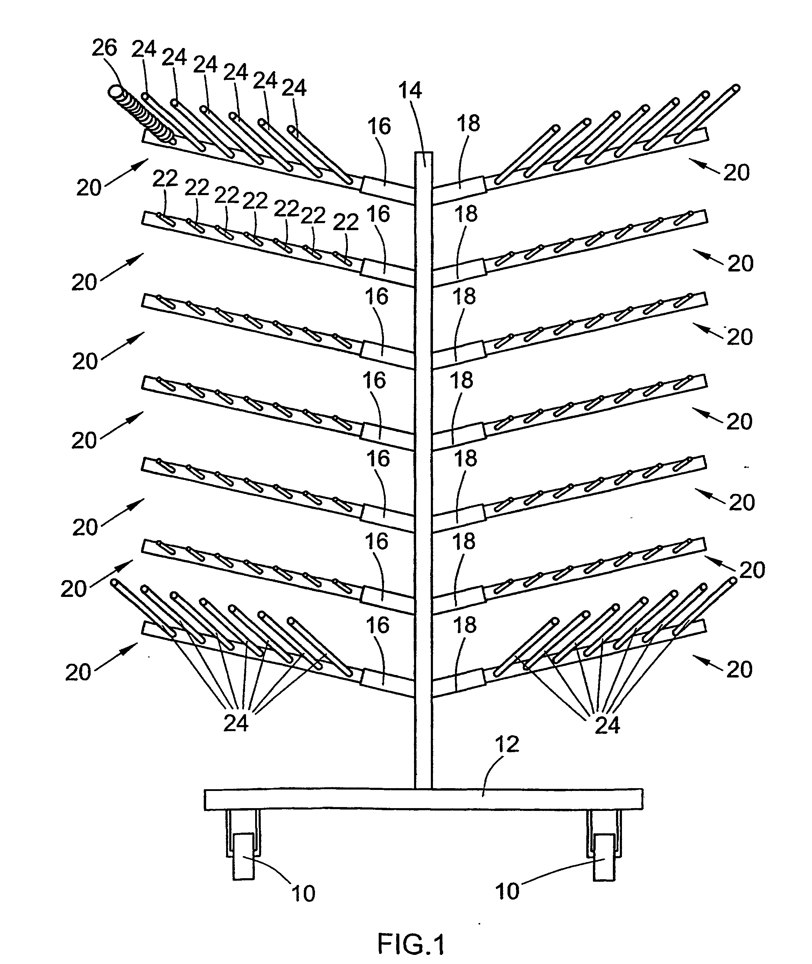

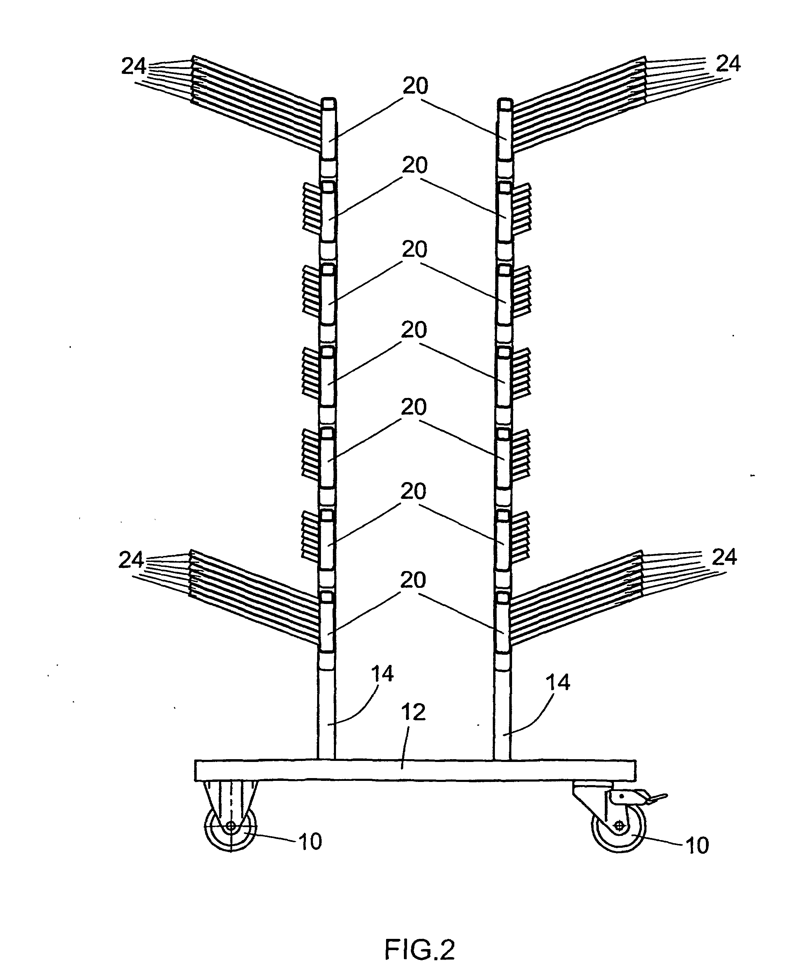

Die in Fig. 1 und 2 dargestellte Ausführungsform des Gestells weist, auf einer mit Rollen 10 versehenen Grundplatte 12, zwei in Fig. 1 hintereinander angeordnete Träger 14 auf. An jedem Träger 14 sind mehrere Steckelemente 16, 18 vorgesehen. Die Steckelemente 16 sind jeweils in im Wesentlichen konstantem Abstand zueinander, übereinander angeordnet. Zu jedem Steckelement 16 ist gegenüberliegend jeweils ein Steckelement 18 vorgesehen, so dass einander gegenüberliegende Steckelementenpaare 16, 18 ausgebildet sind.

In jedes Steckelement 16, 18 ist eine Aufnahmeeinrichtung 20 eingesteckt. Die Aufnahmeeinrichtungen 20 weisen in der dargestellten Ausführungsform einen runden Querschnitt auf. Um ein Verdrehen der Aufnahmeeinrichtungen 20 in den Steckelementen 16, 18 zu vermeiden, weisen die Aufnahmeeinrichtungen 20 und/oder die Steckelemente 16, 18 eine Verdrehsicherung auf. Diese kann beispielsweise derart ausgebildet sind, dass die Steckelemente 16, 18 einen nicht-runden Querschnitt und die Aufnahmeeinrichtungen 20 einen hierzu komplementären, ebenfalls nicht-runden Querschnitt aufweisen.

Jede einzelne Aufnahmeeinrichtung weist mehrere Halteelemente 22 in Form von stabförmigen Zapfen auf. Auf die Halteelemente 22 sind die Trägereinrichtungen 24 aufgesteckt.

Zur Verdeutlichung sind in den Fign. 1 und 2 nur auf den jeweils unteren und oberen Aufnahmeeinrichtungen 20 Trägereinrichtungen 24 dargestellt. Auf einer Trägereinrichtung 24 ist ein geraffter Naturdarm 26 dargestellt. Wenn das Gestell vollständig bestückt ist, sind selbstverständlich sämtliche Trägereinrichtungen 24 mit Naturdarm 26 bestückt. Ebenso sind sämtliche Aufnahmeeinrichtungen 20 mit Trägereinrichtungen 24 bestückt.

Die an den Aufnahmeeinrichtungen 20 vorgesehenen Halteelemente 22 sind schräg ausgerichtet, so dass die Trägereinrichtungen 24 steigend angeordnet sind, soweit die Aufnahmeeinrichtungen 20 in die Steckelemente 16, 18 eingesteckt sind. Hierdurch ist ein Herunterrutschen der Naturdärme 26 vermieden.

Die einzelnen Trägereinrichtungen 24 werden mit Hilfe einer Maschine mit Naturdärmen bestückt, wobei die Naturdärme sodann auf den Trägereinrichtungen 24 in geraffter Form vorliegen. Anschließend wird von Hand oder automatisch die mit Naturdarm bestückte Trägereinrichtung auf ein Halteelement 22 aufgesteckt. Hierbei ist es nicht erforderlich, dass die Aufnahmeeinrichtung bereits in einem Steckelement 16, 18 des Gestells steckt. Die Aufnahmeeinrichtung 20 kann ebenso in einer neben der Maschine vorgesehenen Halterung gehalten sein.

Anschließend wird die nächste Trägereinrichtung mit Naturdarm bestückt und wiederum auf die Aufnahmeeinrichtung 20 gesteckt. Wenn sämtliche Halteelemente 22 der Aufnahmeinrichtung 20 mit Trägereinrichtungen 24 bestückt sind, wird die gesamte Aufnahmeeinrichtung 20 an dem Gestell befestigt, indem sie in eine Steckverbindung 16, 18 eingesteckt wird.

Hiernach wird die nächste Aufnahmeeinrichtung 20 mit Trägereinrichtungen 24, auf denen der Naturdarm vorhanden ist, bestückt.

Aufgrund der Anordnung der einzelnen Aufnahmeeinrichtungen 20 sowie der Träger 14 kann ein Gestell gleichzeitig von zwei oder bis zu vier Personen bestückt werden. Hierdurch ist die Verweilzeit der Naturdärme auf dem Gestell vor dem Gefrieren verringert. Sobald ein Gestell vollständig mit Naturdärmen bestückt ist, wird das Gestell in eine Kühl- bzw. Gefrieranlage verfahren. Dies kann durch einfaches Schieben erfolgen, wenn die Gestelle mit Rollen 10 ausgestattet sind. Das Verfahren der Gestelle kann ferner auch automatisch erfolgen.

## Patentansprüche

1. Verfahren zur Lagerung von Naturdärmen, insbesondere Schweine- und Schafsdärmen, für die Fleisch- und Wurstverpackung, wobei die Naturdärme (26) nach Aufarbeitung tiefgefroren werden, und die Naturdärme (26) vor dem Tiefgefrieren auf im Wesentlichen stabförmige Trägereinrichtungen (24) aufgezogen werden,
**dadurch gekennzeichnet,**
**dass** die Naturdärme (26) vor dem Tiefgefrieren schockgefroren werden.

2. Verfahren nach Anspruch 1, bei welchem die mit Naturdärmen (26) bestückten Trägereinrichtungen (24) an einem Gestell lösbar angebracht werden.

3. Verfahren nach Anspruch 1 oder 2, wobei die Naturdärme (26) vor dem Tiefgefrieren auf die Temperatur von mindestens -30 °C schockgefroren werden.

4. Verfahren nach einem der Ansprüche 1-3, wobei die Naturdärme (26) auf mindestens -50 °C tiefgefroren werden.

5. Verfahren nach einem der Ansprüche 1-4, wobei die Aufarbeitung Entsalzen der Naturdärme und Einweichen der Naturdärme umfasst.

6. Verfahren nach einem der Ansprüche 1-5, wobei die Aufbereitung unter Zuhilfenahme von lebensmittelrechtlich zugelassenen Weichmachungsmitteln erfolgt.

## Claims

1. Method for storing natural casings, in particular casings of hogs and sheep, for packaging meat and sausages, the natural casings (26) being deep-frozen after preparation, and the natural casings (26) are slipped onto substantially rod-shaped support means (24) before deep-freezing
**characterized in that**
the natural casings (26) are shock-frozen before deep-freezing.

2. The method of claim 1, wherein the support means (24) loaded with natural casings (26) are removably attached to a frame.

3. The method of claim 1 or 2, wherein the natural casings (26) are shock-frozen to a temperature of at least -30°C before deep-freezing.

4. The method of one of claims 1-3, wherein the natural casings (26) are shock-frozen to a temperature of at least -50°C before deep-freezing.

5. The method of one of claims 1-4, wherein the preparation includes desalting the natural casings and soaking the natural casings.

6. The method of one of claims 1-5, wherein the preparation is performed using softening agents approved for contact with food.

## Revendications

1. Procédé d'entreposage de boyaux naturels, en particulier de boyaux de porcs et de moutons, pour l'emballage de charcuteries et de saucissons, les boyaux naturels (26) étant surgelés après la préparation, et les boyaux naturels (26) avant la surgélation étant montés sur des dispositifs de supports essentiellement en bâtonnets (24), **caractérisé en ce que** les boyaux naturels (26) sont congelés ultrarapidement avant surgélation.

2. Procédé selon la revendication 1, dans lequel les dispositifs de support (24) garnis des boyaux naturels (26) sont amenés sur une structure de manière détachable.

3. Procédé selon la revendication 1 ou 2, dans lequel les boyaux naturels (26) sont congelés ultrarapidement avant la surgélation à la température d'au moins -30°C.

4. Procédé selon l'une quelconque des revendications 1 à 3, dans lequel les boyaux naturels (26) sont surgelés à au moins -50°C.

5. Procédé selon l'une quelconque des revendications 1 à 4, dans lequel la préparation comprend le dessalement des boyaux naturels et le trempage des boyaux naturels.

6. Procédé selon l'une quelconque des revendications 1 à 5, dans lequel la préparation s'effectue sous adjonction d'agents de ramollissement autorisés pour les aliments.
